# EUROPÄISCHE PATENTSCHRIFT

(11) **EP 4 360 428 B1**
(45) Veröffentlichungstag und Bekanntmachung des Hinweises auf die Patenterteilung: **12.08.2026**
(21) Anmeldenummer: 23205126.8
(22) Anmeldetag: 23.10.2023
(51) Int. Cl.: A01C 23/00, A01C 7/08, F16K 7/07, F16K 25/00, F16K 27/02

(54) **QUETSCHVENTIL, VERTEILERVORRICHTUNG FÜR EIN GÜLLEAUSBRINGFAHRZEUG AUFWEISEND EIN QUETSCHVENTIL UND VERWENDUNG EINES QUETSCHVENTILS**
PINCH VALVE, DISTRIBUTOR DEVICE FOR A MANURE REMOVAL VEHICLE COMPRISING A PINCH VALVE AND USE OF A PINCH VALVE
SOUPAPE À MANCHON, DISPOSITIF DE DISTRIBUTION POUR UN VÉHICULE DE DISTRIBUTION DE LISIER COMPRENANT UNE SOUPAPE À MANCHON ET UTILISATION D'UNE SOUPAPE À MANCHON

(30) Priorität: 27.10.2022 DE 102022004018; 23.03.2023 DE 102023001129
(43) Veröffentlichungstag der Anmeldung: 01.05.2024
(73) Patentinhaber: Zunhammer, Sebastian, 83301 Traunreut (DE)
(72) Erfinder: Zunhammer, Sebastian, 83301 Traunreut (DE)
(74) Vertreter: Einsiedler, Johannes

(56) Entgegenhaltungen:
- DE-U1- 20 217 464
- US-A1- 2008 105 839
- ROSS ET AL: "Quetschventile", 30 November 2019 (2019-11-30), XP093008633, Retrieved from the Internet <URL:https://www.rosseuropa.com/fileadmin/redaktion/de/dokumentation/kataloge-broschueren/pdf/2019-11-26_CAT_Quetschventile.pdf> [retrieved on 20221215]

## Beschreibung

Die Erfindung betrifft ein pneumatisches Quetschventil für eine landwirtschaftliche Vorrichtung, insbesondere Verteilervorrichtung mit einem schlauchförmigen Absperrelement, das in einem zylinderförmigen Gehäuse mit einem Anschlussstutzen für eine Druckluftzuführung angeordnet ist. Die Erfindung betrifft zudem eine Verteilervorrichtung für ein Gülleausbringfahrzeug mit zumindest einem Quetschventil.

Pneumatische Quetschventile sind hinlänglich im Stand der Technik für das Absperren und Regeln bzw. Dosieren von abrasiven, korrosiven und fasrigen Produkten wie Granulaten, Pulver, Pellets, Stäuben und feststoffhaltigen Flüssigkeiten, wie beispielsweise Gülle bekannt.

Indem das Gehäuse des Ventils, das in der Regel einen Anschlussstutzen für eine Druckluftzuführung aufweist, mit Druckluft oder einem anderen neutralen Gas beaufschlagt wird, verformt sich ein elastisches Absperrelement lippenförmig und sperrt so den Produktstrom ab. Wird das Ventilgehäuse durch Entlüftung freigegeben, öffnet sich das Absperrelement durch den Druck des Produktstroms und/oder durch eine dem Absperrelement innenwohnende Rückstellkraft wieder bis zum vollen Durchgang.

Die DE 10 2013 214 639 A1 offenbart ein Quetschventil, das insbesondere für trübe Flüssigkeiten wie Gülle oder Abwasser verwendet wird. Der Quetschschlauch des Quetschventils ist um den Leitungsschlauch gewickelt. Durch Beaufschlagen des Quetschschlauches mit Druck, beispielsweise mit Luftdruck oder Hydrauliköl, quetscht der Quetschschlauch den Leitungsschlauch zusammen und reduziert somit den Durchmesser des Leitungsschlauches. Als nachteilig an diesem Quetschventil erweist sich der hohe konstruktive Aufwand und die Anfälligkeit für Verstopfungen.

Die DE 298 22 642 U1 offenbart ein Quetschventil mit einem rohrförmigen Gehäuse, in dem eine schlauchförmige Quetschventilmanschette angeordnet ist, die von an den Stirnseiten des Gehäuses vorhandenen Endstücken in dem Gehäuse fixiert ist. Nachteilig an dieser Art der Quetschventilgattung ist die aufwendige Montage und nachlassende Dichtigkeit im Dauerbetrieb.

Die DE 202 17 464 offenbart ein Gülleausbringfahrzeug mit einem Güllefass und einer Ausbringvorrichtung, welche wenigstens ein Verteilerrohr und eine Vielzahl daran befestigter Ausbringleitungen mit bodennahen Gülleaustrittsöffnungen aufweist, das dadurch gekennzeichnet ist, dass zwischen dem Verteilerrohr und wenigstens einer Ausbringleitung ein fluidisch betätigbares Ventil angeordnet ist.

Die US 2008/105839 A1 offenbart Fluidsysteme und insbesondere Durchflussregelventile und Betriebsverfahren hierfür.

Aufgabe der vorliegenden Erfindung ist es ein pneumatisches Quetschventil anzugeben, das konstruktiv einfach ausgebildet und somit kostengünstig in der Herstellung ist, wartungsarm sowie zuverlässig betrieben und einfach ausgetauscht werden kann. Zudem sollte eine Funktionsprüfung sicher, insbesondere aber ohne technischen Aufwand bzw. technische Hilfsmittel durchgeführt werden können

Zur Lösung der Aufgabe schlägt die Erfindung ein Quetschventil nach dem Oberbegriff von Patentanspruch 1 vor, das dadurch gekennzeichnet ist, dass ein Absperrelement aus einem elastischen, zumindest abschnittsweise ein Gewebe aufweisenden Schlauch mit einer Shore-Härte von 40 bis 60 gebildet ist, dass in dem Gehäuse zwei diametral angeordnete, bauchförmige Erweiterungen zur Aufnahme des gequetschten Absperrelements ausgebildet sind, und dass das Gehäuse aus einem elastischen, transparenten Kunststoff mit einer Shore-Härte von 75 bis 95 gebildet ist.

Die Shore-Härte ist eine Kennzahl, die vorwiegend für Elastomere und gummielastische Polymere eingesetzt wird. Sie steht in direkter Beziehung zur Eindringtiefe und ist somit ein Maß für die Werkstoffhärte. Als Eindringkörper (Indenter) wird ein federbelasteter Stift aus gehärtetem Stahl verwendet. Bei diesen Verfahren wird der jeweilige Indenter mit einer Federkraft in den Prüfkörper gedrückt und die Eindringtiefe stellt somit ein Maß für die Shore-Härte dar.

Für den erfindungsgemäßen Schlauch wie auch für das erfindungsgemäße Gehäuse wurden die Shore-Härten mit einem Durometer vom Typ A gemäß der DIN ISO 48-4 bestimmt. Hierbei wird ein Prüfgewicht von 1 kg für 15 s auf den Werkstoff gedrückt. Der Intender besitzt hierfür eine flache Spitze mit 0,79 mm Durchmesser bei einem Öffnungswinkel von 35° (vgl. DIN ISO 48-4:2021-02).

Überraschenderweise wurde gefunden, dass ein Absperrelement, das aus einem zumindest abschnittsweise ein Gewebe aufweisenden elastischen Schlauch mit einer Shore-Härte von 40 bis 60, bevorzugt 40 bis 50 gebildet ist, eine ideale Rückstellkraft aufweist. In Verbindung mit der bevorzugten Verwendung bzw. des bevorzugten Einsatzes des Quetschventils als Gülleabsperrventil öffnet sich das Absperrelement durch den Druck des Güllestroms und der oben genannten Rückstellkraft zuverlässig zum vollen Durchgang.

Der Schlauch ist aus Naturgummi, Silikon oder einem geeigneten Kunststoff, wie Ethylen-Propylen-Dien-Kautschuk, Fluor-Kautschuk, Chloropren-Kautschuk oder anderen Kunststoffen, wie z.B. chlorsulfoniertes Polyethylen, gebildet. In einer bevorzugten Ausführungsform ist der elastische Schlauch ein Gewebeschlauch. Das Gewebe ist vorzugsweise in den Schlauch eingegossen.

Erfindungsgemäß weist das zylinderförmige, aus einem elastischen, transparenten Kunststoff mit einer Shore-Härte von 75 bis 95, gebildete Gehäuse, zwei diametral angeordnete, bauchförmige Erweiterungen auf, die in vorteilhafterweise das nach einer Druckbeaufschlagung des Gehäuses lippenförmig verformte Absperrelement aufnehmen. Dies ermöglicht eine zuverlässige Absperrung des Produkt-, insbesondere Güllestroms, ohne Nachtropfen. Der Anschlussstutzen für die Druckluft ist vorzugsweise oberhalb einer bauchförmigen Erweiterung angeordnet.

Die Erfindung wendet sich ab vom Stand der Technik bzw. von der in der Landwirtschaft üblichen, insbesondere dunklen Farbgestaltung funktionaler Bauteile, indem das Gehäuse transparent ausgebildet ist. Überraschenderweise wurde gefunden, dass das erfindungsgemäße Gehäuse hierdurch eine Sichtprüfung mitunter eine Funktionsprüfung, insbesondere ohne technischen Aufwand bzw. technische Hilfsmittel ermöglicht.

Einer Bedienperson ist es demnach möglich schnell und ohne großen Aufwand eine Vielzahl von, bsp. an einer Verteilervorrichtung angeordneten, erfindungsgemäßen Quetschventilen, optisch auf Fehler oder Fehlfunktionen hin zu überprüfen. Dadurch, dass der Produktstrom nur innerhalb des schlauchförmigen Absperrelements geführt wird, bleibt der Gehäuseinnenraum durch das transparente Gehäuse dauerhaft einer Sichtprüfung, im Übrigen auch im Betrieb des Ventils zugänglich.

Das transparente Gehäuse ist aus einem elastischen Kunststoff gebildete. In vorteilhafterweise ist dadurch der Einbau in einen Leitungsabschnitt einer Verteilervorrichtung für Gülle und die Anschlussmöglichkeit an eine Druckluftleitung vereinfacht. Zudem ist die Shore-Härte von 75 bis 95, bevorzugt 75 bis 85, für das zylinderförmige Gehäuse erfindungsgemäß, da hierdurch ein jeweils am oberen und un teren Ende des Absperrelements eingeschobener formstabiler Rohrleitungsabschnitt über einfache über das Gehäuse angelegte Fixiermittel, wie beispielsweise Schlauchschellen, befestigt werden kann. Über genannte Rohrleitungsabschnitte wird naturgemäß der Zu- und Ablauf des Quetschventils bzw. eine Anbindung an eine Zu- und eine Ableitung erreicht. Derartige Rohrleitungsabschnitte befinden sich beispielsweise in einer Verteilervorrichtung für Gülle. In einer bevorzugten Ausführungsform ist das Gehäuse aus Polyurethan gebildet, da dieser Werkstoff langlebig und hoch belastbar ist.

In einer nicht erfindungsgemäßen Ausgestaltung kann das transparente Gehäuse aus einem Hartkunststoff gebildete sein, das an den Gehäuseöffnungen geschlitzt ist, um einen jeweils am oberen und unteren Ende des Absperrelements eingeschobenen formstabilen Rohrleitungsabschnitt über einfache über das Gehäuse angelegte Fixiermittel, wie beispielsweise Schlauchschellen, befestigen zu können. Denkbar ist auch, bsp. durch 2K-Spritzguss, das Gehäuse an den Gehäuseöffnungen aus elastischem und mittig aus hartem Kunststoff auszubilden.

Durch die Kombination der beiden in das Absperrelement eingeschobenen, vorzugsweise starren Rohrleitungsabschnitte, dem vorzugsweise elastischen Gehäuse mit der genannten bevorzugten Shore-Härte und den am oberen und unteren Rand angelegten Fixiermitteln wird zuverlässig und konstruktiv einfach ein druckluftdichter Gehäuseinnenraum geschaffen. In einer bevorzugten Ausführungsform weist das Gehäuse am oberen und unteren Rand Hinterschneidungen zur Aufnahme der Fixiermittel auf.

Der erfindungsgemäße Erfolg des Quetschventils für eine Verteilervorrichtung für Gülle gegenüber dem Stand der Technik, nämlich ein zuverlässiges Schließen ohne Nachtropfen und zuverlässiges Öffnen durch den typischen Gülledruck in der Verteilervorrichtung, sowie die hohe Dichtigkeit, einfache Austauschbarkeit und einfache Funktionsprüfung ist nur durch eine Kombination der beanspruchten Shore-Härte für Absperrelement und das transparente Gehäuse erzielbar.

Das erfindungsgemäße Quetschventil wird in vorteilhafterweise in einer Verteilervorrichtung, wie beispielsweise Düsen-, Schleppschlauch- oder Bodeninjektions-Verteilervorrichtung für ein Gülleausbringfahrzeug verwendet.

Ein Gülleausbringfahrzeug umfasst im Allgemeinen einen Tank für Gülle, mindestens ein Fördermittel zum Fördern der Gülle und eine Vielzahl von Gülleauslässen, wie beispielsweise Schleppschuh- oder Schleppschlauchauslässe zum Ausbringen der Gülle auf eine landwirtschaftliche Nutzfläche.

Durch die Fördermittel wird die Gülle über eine Leitung aus dem Tank gefördert, mit Druck beaufschlagt, zu einem Verteilerkopf für eine Querverteilung, beispielsweise einem Verteilerkopf mit Lochscheiben (Exc-Cut Verteilerkopf) oder einer Schnecke (Schneckenverteilerbalken) gefördert. Von diesem Verteilerkopf ausgehend wird die Gülle schließlich über eine Vielzahl weiterer, an einer Verteilervorrichtung angebrachter Leitungen zu den Gülleauslässen gefördert.

Die Fördermittel sind üblicherweise Pumpen, die über ein mechanisches Getriebe von einer Zapfwelle des Fahrzeugs oder eines Zugfahrzeugs angetrieben werden. Über die Auslässe wird die Gülle dann auf die landwirtschaftliche Fläche verteilt.

Die Leitungen zu den Gülleauslässen sind in der Regel an einem oder mehreren Verteilervorrichtungen, die als Seitenausleger beidseitig am Gülleausbringfahrzeug angebracht sind, montiert. Hierdurch lassen sich Arbeitsbreiten von über 20 m erzielen. Die Auslässe sind üblicherweise ca. 25 cm voneinander beabstandet, sodass beispielsweise bei einer Arbeitsbreite von 15 m 60 Leitungen mit Gülleauslässen an der Verteilervorrichtung montiert sind.

Erfindungsgemäß ist demnach vorgesehen, ein Quetschventil in jeder einzelnen zu einem Gülleauslass führenden, an einer Verteilervorrichtung montierten Leitung auszubilden.

Damit lässt sich der Güllestrom über die gesamte Arbeitsbreite, abschnittsweise und/oder punktuell ein- oder ausschalten, d.h. absperren.

In vorteilhafterweise kann dadurch, beispielsweise in Abhängigkeit von über die GPS-Technik oder über an der Verteilervorrichtung angeordneten Sensoreinheiten erhältlichen Pflanzenwachstumsdaten, die landwirtschaftliche Fläche abschnittsweise und/oder punktuell gedüngt werden. Zudem ist eine Teilabschaltung des Güllestroms beispielsweise am Flächenrand möglich. Schließlich kann durch die erfindungsgemäße Verteilervorrichtung, in Abhängigkeit der zu düngenden Nutzpflanze beispielsweise nur jeder zweite, dritte etc. Gülleauslass eingeschaltet, d.h. mit einem Güllestrom versorgt werden.

Die Druckbeaufschlagung der einzelnen Quetschventile erfolgt vorzugsweise mit durch die Zugmaschine bereitgestellter Druckluft. Die die Ansteuerung, d.h. die Druckbeaufschlagung der einzelnen Quetschventile erfolgt insbesondere durch eine als Bordcomputer ausgebildete zentrale Rechnereinheit.

In einer bevorzugten Ausführungsform der erfindungsgemäßen Verteilervorrichtung sind die Quetschventile in den Leitungen, ausgehend von dem Verteilerkopf zu den Gülleauslässen in unmittelbarer Nähe des Verteilerkopfs ausgebildet. Dadurch kann der gesamte Leitungsabschnitt ausgehend von dem Verteilerkopf zu dem Gülleauslass im Falle einer Absperrung durch das Quetschventil leerlaufen. In vorteilhafterweise wird dadurch eine Verstopfung durch antrocknende Gülle in dem jeweiligen, abgesperrten Leitungsabschnitt vermieden. Diese Ausführungsform eignet sich insbesondere für feststoffhaltige, dickflüssige Gülle.

In einer weiteren bevorzugten Ausführungsform der erfindungsgemäßen Verteilervorrichtung sind die Quetschventile in den Leitungen, ausgehend von dem Verteilerkopf zu den Gülleauslässen in unmittelbarer Nähe der Auslässe angeordnet. Dadurch wird nach einer Druckbeaufschlagung des Quetschventils eine unmittelbare Absperrung des Güllestroms erzielt. In vorteilhafterweise wird dadurch ein Nachtropfen von noch in dem jeweiligen, abgesperrten Leitungsabschnitt befindlicher Gülle nahezu vermieden. Diese Ausführungsform eignet sich insbesondere für dünnflüssige Gülle.

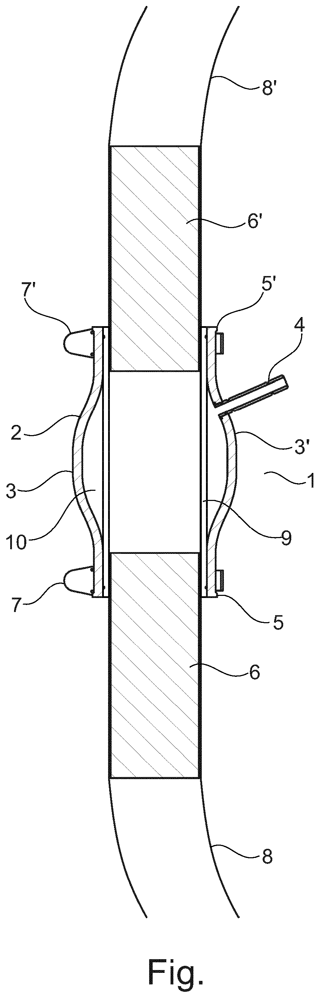

Nachfolgend wird ein Ausführungsbeispiel der Erfindung unter Bezugnahme auf die Zeichnung im Detail erläutert. Dabei zeigt die Figur einen Schnitt A-A durch das erfindungsgemäße Quetschventil.

Das pneumatische Quetschventil (1) umfasst ein zylinderförmiges, aus transparentem Kunststoff gebildetes Gehäuse (2) mit zwei diametral angeordneten bauchförmigen Erweiterungen (3, 3'), einem Anschlussstutzen (4) für eine Druckluftzuführung, sowie am oberen und unteren Rand ausgebildete Hinterschneidungen (5, 5') zur Aufnahme von Fixiermitteln. Durch zwei starre, in das Absperrelement (9) eingeschobene Rohrleitungsabschnitte (6, 6'), durch das Gehäuse (2), durch das elastische Absperrelement (9) und durch die am oberen und unteren Rand angelegten Fixiermitteln (7, 7') wird ein druckluftdichter Gehäuseinnenraum (10) geschaffen. In einer Verteilervorrichtung für ein Gülleausbringfahrzeug ist das Quetschventil (1) in einem Leitungsabschnitt, einer ausgehend von dem Verteilerkopf zu dem Gülleauslass führenden, in der Regel flexiblen Leitung (8, 8') ausgebildet.

Im Gehäuseinneren befindet sich das Absperrelement (9), das aus einem elastischen, zumindest abschnittsweise ein Gewebe aufweisenden Schlauch mit einer Shore-Härte von 40 bis 60 gebildet wird. Das Absperrelement (9) liegt am oberen und unteren Rand der Innenseite des Gehäuses (2) an. Die beiden starren Rohrleitungsabschnitte (6, 6') sind in das schlauchförmige Absperrelement (9) eingeschoben.

Das erfindungsgemäße Quetschventil erweist sich als kostengünstig und wartungsarm, und kann zudem einfach einer Sichtprüfung unterzogen und ggf. ausgetauscht werden. Demnach wird das Quetschventil in vorteilhafterweise in landwirtschaftlichen Vorrichtungen, insbesondere in Verteilervorrichtungen verwendet.

### Bezugszeichenliste

- 1: Quetschventil
- 2: Gehäuse
- 3: Erweiterungen
- 4: Anschlussstutzen
- 5: Hinterschneidungen
- 6: Rohrleitungsabschnitte
- 7: Fixiermittel
- 8: Leitung
- 9: Absperrelement
- 10: Gehäuseinnenraum

## Patentansprüche

1. Pneumatisches Quetschventil (1) für eine landwirtschaftliche Vorrichtung, insbesondere Verteilervorrichtung, mit einem schlauchförmigen Absperrelement (9), wobei das Absperrelement (9) in einem zylinderförmigen Gehäuse (2) mit einem Anschlussstutzen (4) für eine Druckluftzuführung angeordnet ist, **dadurch gekennzeichnet, dass** das Absperrelement (9) aus einem elastischen, zumindest abschnittsweise ein Gewebe aufweisenden Schlauch mit einer Shore-Härte von 40 bis 60 gebildet ist, dass in dem Gehäuse (2) zwei diametral angeordnete, bauchförmige Erweiterungen (3, 3') zur Aufnahme des gequetschten Absperrelements (9) ausgebildet sind, und dass das Gehäuse (2) aus einem elastischen, transparenten Kunststoff mit einer Shore-Härte von 75 bis 95 gebildet ist.

2. Quetschventil nach Anspruch 1, **dadurch gekennzeichnet, dass** das Gehäuse (2) am oberen und unteren Rand Hinterschneidungen (5, 5') zur Aufnahme von Fixiermitteln (7, 7') aufweist.

3. Quetschventil nach einem der vorhergehenden Ansprüche, **dadurch gekennzeichnet, dass** das Gehäuse (2) aus Polyurethan gebildet ist.

4. Verteilervorrichtung für ein Gülleausbringfahrzeug mit einer Vielzahl an von einem Verteilerkopf ausgehenden und zu Gülleauslässen führenden angebrachten Leitungen (8, 8'), **dadurch gekennzeichnet, dass** ein Quetschventil (1) nach einem der Ansprüche 1 bis 3 in jeder einzelnen zu einem Gülleauslass führenden Leitung (8, 8') ausgebildet ist.

5. Verteilervorrichtung nach Anspruch 4, **dadurch gekennzeichnet, dass** die Quetschventile (1) in den Leitungen (8, 8'), ausgehend von dem Verteilerkopf zu den Gülleauslässen in unmittelbarer Nähe des Verteilerkopfs ausgebildet sind.

6. Verteilervorrichtung nach Anspruch 4, **dadurch gekennzeichnet, dass** die Quetschventile (1) in den Leitungen (8, 8'), ausgehend von dem Verteilerkopf zu den Gülleauslässen in unmittelbarer Nähe der Gülleauslässe angeordnet sind.

7. Verwendung eines Quetschventils (1) nach einem der Ansprüche 1 bis 3 in landwirtschaftlichen Vorrichtungen, insbesondere in Verteilervorrichtungen.

## Claims

1. Pneumatic pinch valve (1) for an agricultural device, in particular a distribution device, comprising a hose-shaped shut-off element (9), wherein the shut-off element (9) is arranged in a cylindrical housing (2) with a connection port (4) for compressed air supply, **characterized in that** the shut-off element (9) is formed from an elastic hose comprising a fabric at least in sections and having a Shore hardness of 40 to 60, that two diametrically arranged, bulge-shaped enlargements (3, 3') for receiving the pinched shut-off element (9) are formed in the housing (2), and that the housing (2) is formed from an elastic, transparent plastic having a Shore hardness of 75 to 95.

2. Pinch valve according to claim 1, **characterized in that** the housing (2) has undercuts (5, 5') at its upper and lower edges for receiving fastening means (7, 7').

3. Pinch valve according to any one of the preceding claims, **characterized in that** the housing (2) is made of polyurethane.

4. Distribution device for a slurry spreading vehicle with a plurality of lines (8, 8') extending from a distributor head and leading to slurry outlets, **characterized in that** a pinch valve (1) according to any one of claims 1 to 3 is arranged in each individual line (8, 8') leading to a slurry outlet.

5. Distribution device according to claim 4, **characterized in that** the pinch valves (1) in the lines (8, 8'), starting from the distributor head towards the slurry outlets, are arranged in close proximity to the distributor head.

6. Distribution device according to claim 4, **characterized in that** the pinch valves (1) in the lines (8, 8'), starting from the distributor head towards the slurry outlets, are arranged in close proximity to the slurry outlets.

7. Use of a pinch valve (1) according to any one of claims 1 to 3 in agricultural devices, in particular in distribution devices.

## Revendications

1. Vanne de pincement pneumatique (1) pour un dispositif agricole, notamment un dispositif de distribution, comprenant un élément d'obturation de type flexible (9), l'élément d'obturation (9) étant disposé dans un boîtier cylindrique (2) avec un raccord (4) pour l'alimentation en air comprimé, **caractérisée en ce que** l'élément d'obturation (9) est formé d'un flexible élastique comportant au moins partiellement un tissu et présentant une dureté Shore de 40 à 60, que dans le boîtier (2) sont prévues deux expansions de forme bombée (3, 3') disposées diamétralement pour recevoir l'élément d'obturation (9) pincé, et que le boîtier (2) est constitué d'un plastique élastique transparent présentant une dureté Shore de 75 à 95.

2. Vanne de pincement selon la revendication 1, **caractérisée en ce que** le boîtier (2) comporte, au bord supérieur et au bord inférieur, des contre-dépouilles (5, 5') destinées à recevoir des moyens de fixation (7, 7').

3. Vanne de pincement selon l'une des revendications précédentes, **caractérisée en ce que** le boîtier (2) est réalisé en polyuréthane.

4. Dispositif de distribution pour un véhicule d'épandage de lisier, avec une pluralité de conduites (8, 8') partant d'une tête de distribution et menant à des sorties de lisier, **caractérisé en ce qu'**une vanne de pincement (1) selon l'une des revendications 1 à 3 est disposée dans chaque conduite (8, 8') menant à une sortie de lisier.

5. Dispositif de distribution selon la revendication 4, **caractérisé en ce que** les vannes de pincement (1) sont disposées dans les conduites (8, 8'), en partant de la tête de distribution vers les sorties de lisier, à proximité immédiate de la tête de distribution.

6. Dispositif de distribution selon la revendication 4, **caractérisé en ce que** les vannes de pincement (1) sont disposées dans les conduites (8, 8'), en partant de la tête de distribution vers les sorties de lisier, à proximité immédiate des sorties de lisier.

7. Utilisation d'une vanne de pincement (1) selon l'une des revendications 1 à 3 dans des dispositifs agricoles, notamment dans des dispositifs de distribution.
